# EUROPÄISCHE PATENTSCHRIFT

(11) **EP 0 706 907 B1**
(45) Veröffentlichungstag und Bekanntmachung des Hinweises auf die Patenterteilung: **13.08.1997**
(21) Anmeldenummer: 95115784.1
(22) Anmeldetag: 06.10.1995
(51) Int. Cl.: B60J 5/04

(54) **Kraftwagentüren**
Vehicle doors
Portes de véhicules

(30) Priorität: 11.10.1994 DE 4436278
(43) Veröffentlichungstag der Anmeldung: 17.04.1996
(73) Patentinhaber: ED. SCHARWÄCHTER GmbH & Co. KG, D-42809 Remscheid (DE)
(72) Erfinder: Klüting, Bernd-Alfred, D-42477 Radevormwald (DE); Krüger, Torge, D-42855 Remscheid (DE)
(74) Vertreter: Schön, Theodor, Patent- und Zivilingenieur

(56) Entgegenhaltungen:
- EP-A- 0 096 188
- EP-A- 0 199 970
- WO-A-90/09902
- DE-A- 3 928 013
- DE-U- 9 211 990
- FR-A- 2 702 424
- GB-A- 2 101 535

## Beschreibung

Die Erfindung bezieht sich auf eine Kraftwagentüre, deren Türkörper aus einem tragenden Rahmen und an diesen angeschlossenen, nicht tragenden Beplankungen, wie Türinnenverkleidung und Türaußenschale, besteht, wobei an den tragenden Rahmen auch die türseitigen Beschlagteile, wie Türscharniere bzw. Türscharnierhälften und Schloßteile sowie die Türeinbauten, insbesondere der Fensterhebemechanismus angeschlossen bzw. anschließbar sind.

Bezüglich der Gestaltung eines Türkörpers für Kraftwagentüren geht die Erfindung von demjenigen Stand der Technik aus, der durch die Verwendung eines starren Tragrahmens und an diesen angeschlossenen Beplankungsteilen gekennzeichnet ist. Bei einer bekannten Bauart eines solchen Türkörpers ist gemäß der DE-OS 3928013 vorgesehen, daß dessen Rahmen aus zwei einerseits die Türscharnieranbindung und andererseits den Türschloßträger bildenden Formteilen, insbesondere Gußteilen, und zwei diese untereinander verbindenden Streben aus einem Strangpressprofilmaterial gebildet ist, wobei die obere Strebe im wesentlichen horizontal angeordnet ist und zugleich auch die Fensterschachtverstärkung bildet. Derartige Gestaltungen des Tragrahmens des Türkörpers erfordern in allen bekannten Abwandlungen, etwa gemäß der GB-OS 2 101 535, die gleichfalls einen aus zwei einander jeweils gegenüberliegenden Horizontal- und Vertikalträgern bestehenden Türrahmen und zudem eine aus zwei zusätzlichen Trägern bestehende Verbindung zwischen dem Schloßteil und jedem der beiden Türscharniere vorsieht, eine verhältnismäßig komplizierte Ausbildung der Beplankungsteile, wie Türinnenverkleidung und Türaußenschale, da bei solchen Rahmenbauweisen des Türkörpers die Beplankungsteile zugleich auch die Stirnseiten des Türkörpers bilden müssen. Ausgehend von der Tatsache, daß eine Kraftwagentüre in allen Bereichen ihrer Umfangskontur, d.h. entlang ihrer Stirnseiten und ihrer Unterseite, eine gewisse Mindesstabilität aufweisen muß erfordert eine derartige Gestaltung des tragenden Türrahmens eine mit einem erheblichen Aufwand verbundene Ausgestaltung von Türinnenverkleidung und/oder Türaußenschale, so daß sich beiden bekannten, auf der Verwendung eines Tragrahmens für den Türkörper gestützten Türkörperkonstruktionen gegenüber der herkömmlichen Bauweise einer Türe aus Türinnen- und Türaussenblech, letztlich keine Vereinfachung bzw. Verbilligung in der Herstellung der Türe ergibt. Darüberhinaus ist ferner auch bereits vorgeschlagen worden einen mit einer einfachen Beplankung aus Türinnenverkleidung und Türaußenschale versehenen Türkörper einer Kraftwagentüre mit einem aus Blechpreßteilen gebildeten Rahmen auszustatten, wobei der Türrahmen auch aus einer Anzahl untereinander verbundenen Blechpressteilen gebildet sein kann. Der Vorteil dieser Gestaltungsform des Türrahmens besteht dabei darin, daß der Türrahmen zugleich auch die Stirnflächen der Türe bildet, so daß die Beplankungsteile, wie Türinnenverkleidung und Türaußenschale, im wesentlichen glattflächig ausgebildet sein können. Da aber bei allen diesen Vorschlägen der Türrahmen jeweils entlang der gesamten Umfangskontur des Türkörpers der Türe umlaufend und im Wesentlichen einheitlich ausgebildet ist erfordert diese Bauweise einer Kraftwagentüre einen erheblichen Herstellungs- und Materialaufwand, der zudem zu einem erheblichen Gesamtgewicht der Türe führt. Der Herstellungsaufwand wird bei solchen Türkonstruktionen charakteristischerweise noch dadurch erhäht, daß in der Regel besondere Scharnierverstärkungen und gegebenenfalls auch Schloßverstärkungen vorgesehen werden müssen.

Der Erfindung liegt, ausgehend von diesem Stande der Technik, die Aufgabe zugrunde, eine Kraftwangentüre der eingangs genannten Bauart zu schaffen, deren Rahmen so gestaltet ist, daß er zugleich auch die Türstirnseiten bildet, trotzdem aber einfach aus wenigen, einfachen Blechpreßteilen bei verhältnismäßig geringem Gesamtgewicht herzustellen ist und die bei hinreichender Steifigkeit ihrer Umfangskontur mit einfachen im Wesentlichen glattflächigen Beplankungsteilen auskommt.

Diese Aufgabe wird erfindungsgemäß im Wesentlichen dadurch gelöst, daß der der Türkörperumfangskontur entsprechend gestaltete Türrahmen aus mehreren untereinander verbundenen, wenigstens einseitig offenen Blechpressprofilen besteht, wobei eines der Teile als Hauptträger ausgebildet ist, während das oder die weiteren, konturergänzenden Teile des Türrahmens als Hilfsträger ausgebildet sind, derart, daß sich sämtliche Teile des Türrahmens untereinander zu einer steifen Türrahmeneinheit ergänzen.
Die erfindungsgemäße Gestaltung des Türrahmens vereinigt den Vorteil einer entlang der Türkörperkontur hinreichend steifen Ausbildung des Türrahmens und der Bildung der Türstirnseiten durch den Türrahmen bei Verwendung einer leichten, aus wenigen einfachen Blechpreßteilen bestehenden und einfach herzustellenden Baueinheit als Türrahmen, die zudem die Verwendung einfacher im wesentlichen glattflächiger Beplankungsteile zuläßt. Ein zusätzlicher Vorteil der erfindungsgemäßen Gestaltung des Türrahmens besteht ferner darin, daß einerseits die Beplankungsteile einfach an den Türrahmen anschließbar sind und andererseits für die Anbringung der türseitig anzuordnenden Türdichtungen hinreichend stabile Anordnungsflächen zur Verfügung stehen. Zugleich ermöglicht die Unterteilung des Türrahmens in einen Haupt-und einen oder mehrere Hilfsträger auch die unmittelbare Anbindung der Türscharniere und der Schloßteile an den Türrahmen, so daß auf die Anbringung zusätzlicher Scharnierverstärkungen und dergl. verzichtet werden kann.

In einer ersten bevorzugten Verwirklichungsform ist im Einzelnen vorgesehen, daß der Hauptträger des Türrahmens aus einem Material größerer Materialdicke besteht als die Hilfsträger.

Anstelle der Verwendung einer größeren Materialdicke für den Hauptträger kann zweckmäßigerweise auch vorgesehen sein, daß der Hauptträger des Türrahmens aus einem Material höherer Festigkeit besteht als die Hilfsträger. Diese Verwirklichungsform zeichnet sich in besonders vorteilhafterweise dadurch aus, daß die Verwendung eines Materials höherer Festigkeit das Gesamtgewicht des Türrahmens nicht oder wenigstens nicht nennenswert erhöht.

In Ergänzung der bevorzugten Verwirklichungsform sieht die Erfindung weiterhin vor, daß der einseitig offene Profilquerschnitt des Hauptträgers und/oder der Hilfsträger bereichsweise durch auf die offene Profilseite aufgesetzte Blechmaterialabschnitte zu einem geschlossenen Hohlprofil ergänzt wird. Dies ermöglicht eine gezielte Verstärkung des Türrahmens an kritischen, insbesondere torsionsgefährdeten Stellen und erlaubt in Verbindung damit naturgemäß auch die Verwendung eines schwächeren Ausgangsmaterials, verbunden mit dem Vorteil einer beträchtlichen Verringerung des Gesamtgewichtes bei optimaler Festigkeit des Türrahmens.

Zweckmäßigerweise ist ferner vorgesehen, daß die Trennlinie zwischen Hauptträger und Hilfsträgern im Wesentlichen diagonal zur Türkontur verlaufend angeordnet ist und daß der Türfeststerrahmen mittels Schweißung am Hauptträger des Türrahmens befestigt ist. Verstärkt kann der Hauptträger zum einen durch eine Ergänzung der bis in den Türschloßbereich hinein weitergeführten Fensterschachtverstärkung zu einem geschlossenen Hohlprofil und zum anderenen durch eine Diagonalstrebe sein, welche ihrerseits in gleicher Weise, wie die Fensterschachtversteifung zu einer drucksteifen Strebe ergänzt sein kann.

Eine besonders bevorzugte Weiterbildung der vorstehend als vorteilhaft bezeichneten Ausgestaltungsform des Türrahmens ergibt sich weiterhin dadurch, daß eine Seitenaufprallschutzeinrichtung vorgesehen ist, welche zugleich auch die Ergänzung des Hauptträgers zu einer Lastaufnahme- bzw. tragenden Einheit bildet, wobei die Seitenaufprallschutzeinrichtung aus einer vorgefertigten baueinheit besteht, welche zwei im vertikalen Abstand voneinander angeordnete Rohre und mit diesen, insbesondere durch Schweißung verbundene Anschlußkonsolen umfaßt, und wobei die Anschlußkonsolen zwischen zwei an dessen Außenfläche anliegenden Aufnahmeabschnitten für die Rohrenden einen der Tiefe des Profilquerschnittes von Haupt-und Hilfsträger des Türrahmens entsprechend erhöhten Mittelteil aufweisen.

Diese besonders bevortzugte Verwirklichungsform eröffnet insbesondere die Möglichkeit, daß der Hauptträger des Türrahmens über die Länge der Fensterschachtverstärkung hin zu einem geschlossenen Hohlprofil ergänzt ist, so daß in diesem Bereich des Türrahmens ein sehr drucksteifes Profil vorhanden ist, wobei die Fensterschachtverstärkung über im wesentlichen vertikal gerichtete Bereiche mit der Seitenaufprallschutzeinrichtung zu einer Art Fachwerkträger ergänzt ist.

Die Erfindung ist in der nachfolgenden Beispielsbeschreibung anhand eines in der Zeichnung dargestellten Ausführungsbeispieles im Einzelnen beschrieben. In der Zeichnung zeigt die
- Figur 1: eine Explosionsdarstellung einer einfachen Verwirklichungsform der erfindungsgemäßen Kraftwagentüre;
- Figur 2: eine schematische schaubildliche Darstellung der Hauptbestandteile des Türrahmens in seiner einfachsten Verwirklichungsform.
- Figur 3: eine Seitenansicht eines Türrahmens für eine Kraftwagentüre;
- Figur 4: eine Explosionsdarstellung einer abgewandelten Ausführungsform der erfindungsgemäßen Kraftwagentüre.

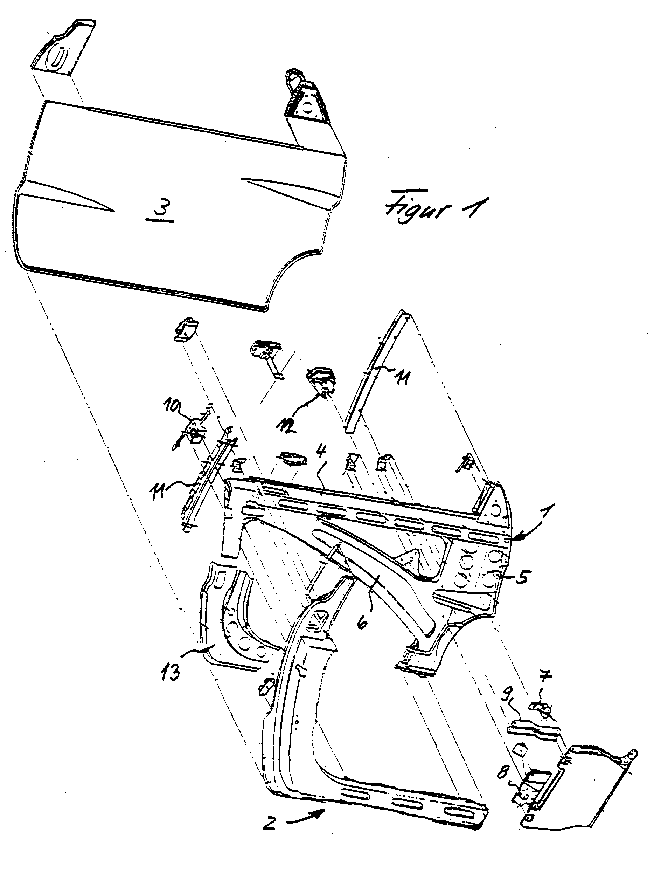

Die in der Figur 1 dargestellte Kraftwagentüre besteht in der Hauptsache aus einem zugleich die Türstirnseiten bildenden Türrahmen und einer an diesen angeschlossenen, im wesentlichen glattflächigen Türaußenschale 3 sowie einer gleichfalls auf den Türrahmen aufgesetzten und gleichfalls im wesentlichen glattflächigen, in der Zeichnung allerdings nicht im Einzelnen gezeigten Türinnenverkleidung. Der Türrahmen umfaßt einen Hauptträger 1 und einen Hilfsträger 2, wobei beide Träger, Haupt-1 und Hilfsträger 2 zwar durch Blechpreßteile mit offenem Profilquerschnitt gebildet sind, der Hauptträger jedoch aus einem hochfesten, tiefziehfähigen Material, der Hilfsträger 2 hingegen aus einem einfachen Tiefziehmaterial geringer Wandungsstärke besteht. Die beiden Träger, Haupt-1 und Hilfsträger 2 sind untereinander mittels Punktschweißung verbunden und bilden so einen entlang der Türkörperkontur umlaufenden Türträger. Im gezeigten Ausführungsbeispiel besteht der Hauptträger 1 im wesentlichen aus einer über die gesamte Türlänge hin durchgehend ausgebildeten Fensterschachtverstärkung 4 und einem vertikal ausgerichteten Türscharnieranschlußbereich 5 sowie einer im Wesentlichen diagonal zum Türrahmen ausgerichteten Diagonalstrebe 6, wobei Fensterschachtverstärkung 4, Türscharnieranschlußbereich 5 und Diagonalstrebe 6 durch ein einheitliches Blechpressteil mit zumindest einseitig offenem Profilquerschnitt gebildet sind und insgesamt einen Fachwerkträger bzw. einen Abschnitt eines Fachwerkträgers bilden. An den Scharnieranschlußbereich des Hauptträgers 1 sind die türseitigen Scharnierhälften 7/8 der Türanlenkung sowie eine Steuerstange 9 angeschlossen. An das schloßseitige Ende des Hauptträgers 1 ist das Türschloß 10 angeschlossen, wobei sämtliche Beschalgteile 7 bis 10 über im Einzelnen nicht gezeigte Schraubenbolzen am Hauptträger befestigt sind. An den Hauptträger 1 ist weiterhin der Fensterrahmen 11 angeschlossen, wobei im Ausführungsbeispiel lediglich der in den Türkörper eintauchende Teil des Fensterrahmens bzw. der Fensterführungsschienen 11 dargestellt ist. Ferner ist an den Hauptträger auch der Fensterhebemechanismus angeschlossen, von dem allerdings nur der Antrieb 12 dargestellt ist. Bei dem in der Zeichnung dargestellten Ausführungsbeispiel ist weiterhin vorgesehen, daß der Hilfsträger abschnittsweise durch ein auf seine offene Profilseite aufgesetztes Schließblech 13 zu einem Kastenprofil geschlossen ist.

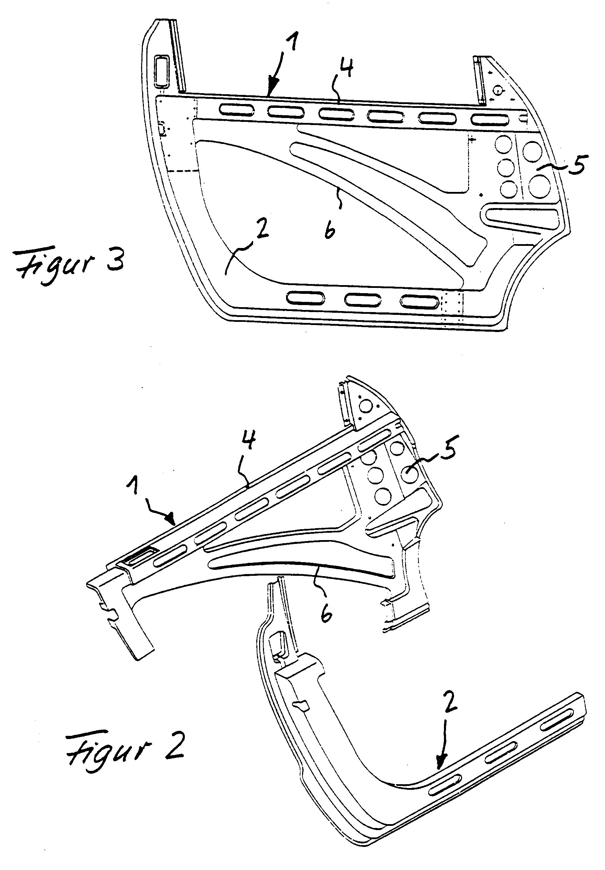

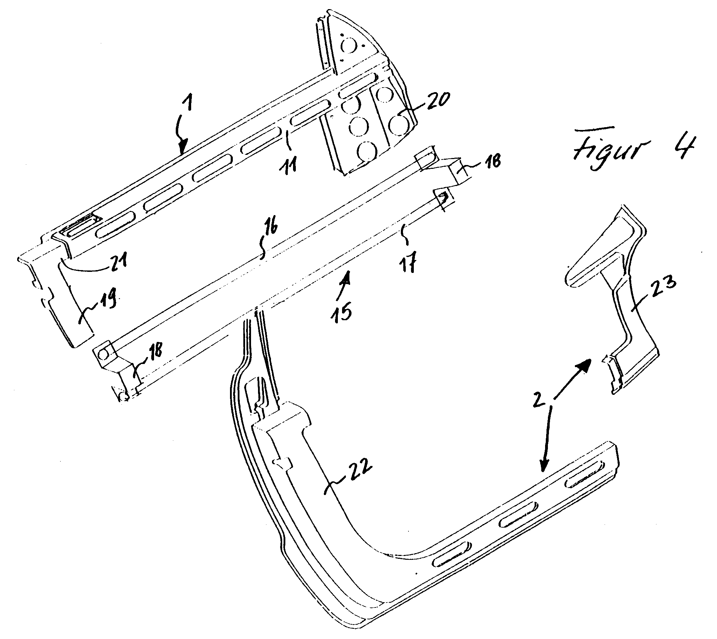

In dem in den Figuren 1 bis 3 gezeigten Ausführungsbeispiel bildet die Diagonalstrebe 6 zugleich auch die Seitenaufprallschutzeinrichtung.
Wie aus der in der Figur 4 gezeigten Ausführungsform ersichtlich kann anstelle der Diagonalstrebe 6 aber auch eine aus einer Doppelrohranordnung 15 bestehende Einrichtung als Seitaufprallschutzeinrichtung vorgesehen sein. Die Doppelrohranordnung 15 besteht aus zwei zueinander parallel ausgerichteten Rohren 16/17 und beidendig an diese angeschlossenen Befestigungskonsolen 18 und ist insgesamt anstelle einer Diagonalstrebe 6 an den Hauptträger 1 angeschlossen. Der durch ein Blechpressteil gebildete Teil 21 des Hauptträgers 1 weist hierbei beidendig nach unten abgewinkelte Fortsätze 19/20 auf, an welchen die Doppelrohranordnung 15 vermittels der Befestigungskonsolen 18 befestigt ist, so daß sich Blechpressteil 21 und Doppelrohranordnung wiederum zu einer Art Fachwerkträger ergänzen. Bei der in der Figur 4 dargestellten Ausführungsform ist ferner vorgesehen, daß der konturergänzende Hilfsträger 2 des Türrahmens zweiteilig ausgebildet ist und die beiden Teile 22 und 23 umfaßt.

## Patentansprüche

1. Kraftwagentüre, deren Türkörper aus einem tragenden Rahmen und an diesen angeschlossenen, nicht tragenden Beplankungen, wie Türinnenverkleidung und Türaußenschale (3), besteht, wobei an den tragenden Rahmen auch die türseitigen Beschlagteile, wie Türscharniere bzw. Türscharnierhälften (7,8) und Schloßteile (10) sowie die Türeinbauten, insbesondere der Fensterhebemechanismus angeschlossen bzw. anschließbar sind, dadurch gekennzeichnet, daß der der Türkörperumfangskontur entsprechend gestaltete Türrahmen aus mehreren untereinander verbundenen, wenigstens einseitig offenen Blechpressprofilen besteht, wobei eines der Teile als Hauptträger (1) ausgebildet ist, während das oder die weiteren, konturergänzenden Teile des Türrahmens als Hilfsträger (2) ausgebildet sind, derart, daß sich sämtliche Teile des Türrahmens untereinander zu einer steifen Türrahmeneinheit ergänzen.

2. Kraftwagentüre nach Anspruch 1, dadurch gekennzeichnet, daß der Hauptträger (1) des Türrahmens aus einem Material größerer Materialdicke besteht als die Hilfsträger (2).

3. Kraftwagentüre nach Anspruch 1, dadurch gekennzeichnet, daß der Hauptträger (1) des Türrahmens aus einem Material höherer Festigkeit besteht als die Hilfsträger (2).

4. Kraftwagentüre nach einem der Ansprüche 1 bis 3, dadurch gekennzeichnet, daß der einseitig offene Profilquerschnitt des Hauptträgers (1) und/oder der Hilfsträger (2) bereichsweise durch auf ihre offene Profilseite aufgesetzte Blechmaterialabschnitte zu einem geschlossenen Hohlprofil ergänzt sind.

5. Kraftwagentüre nach einem der Ansprüche 1 bis 4, dadurch gekennzeichnet, daß die Trennlinie zwischen Hauptträger (1) und Hilfsträgern (2) im Wesentlichen diagonal zur Türkontur verlaufend angeordnet ist.

6. Kraftwagentüre nach einem der Ansprüche 1 bis 5, dadurch gekennzeichnet, daß der Türfenststerrahmen (11) mittels Schweißung am Hauptträger (1) des Türrahmens befestigt ist.

7. Kraftwagentüre nach einem der Ansprüche 1 bis 6, dadurch gekennzeichnet, daß eine Seitenaufprallschutzeinrichtung (15) vorgesehen ist, welche zugleich auch die Ergänzung des Hauptträgers (1) zu einer Lastaufnahme- bzw. tragenden Einheit bildet.

8. Kraftwagentüre nach einem der Ansprüche 1 bis 7, dadurch gekennzeichnet, daß die Seitenaufprallschutzeinrichtung (15) aus einer vorgefertigten Baueinheit besteht, welche zwei im vertikalen Abstand voneinander angeordnete Rohre (16,17) und mit diesen, insbesondere durch Schweißung verbundene Befestigungskonsolen (18) umfaßt, wobei die Befestigungskonsolen (18) zwischen zwei an dessen Außenfläche anliegenden Aufnahmeabschnitten für die Rohrenden einen der Tiefe des Profilquerschnittes von Haupt-und Hilfsträger (1,2) des Türrahmens entsprechend erhöhten Mittelteil aufweisen.

9. Kraftwagentüre nach einem der Ansprüche 1 bis 8, dadurch gekennzeichnet, daß der Hauptträger (1) über die Länge der Fensterschachtverstärkung hin zu einem geschlossenen Hohlprofil ergänzt und über im wesentlichen vertikal gerichtete Bereiche mit der Seitenaufprallschutzeinrichtung (15) zu einer Art Fachwerkträger ergänzt ist.

10. Kraftwagentüre nach einem der Ansprüche l bis 9, dadurch gekennzeichnet, daß der Haupt- und der oder die Hilfsträger (1,2) zugleich auch die beiden Stirnseiten sowie die geschlossene Unterseite des Türkörpers bilden, so daß sowohl die Türaußenbeplankung als auch die Türinnenverkleidung durch im wesentlichen glattflächige Plattenteile gebildet sein können.

## Claims

1. Vehicle door, whereof the door body consists of a supporting frame and non-supporting coverings, such as an internal door panel and outer door shell (3) connected thereto, in which case on the supporting frame the door fittings, such as door hinges or door hinge halves (7, 8) and lock parts (10) as well as the door components, in particular the window lifter mechanism are also connected or able to be connected, characterised in that the door frame designed to correspond to the peripheral contour of the door body consists of several interconnected pressed sheet metal profiles, which are open on at least one side, one of the parts being constructed as the main support (1), whereas the other part or parts of the door frame, supplementing the contour, being constructed as auxiliary supports (2), so that all the parts of the door frame complement each other to form a rigid door frame unit.

2. Vehicle door according to Claim 1, characterised in that the main support (1) of the door frame consists of a material of greater thickness than the auxiliary support (2).

3. Vehicle door according to Claim 1, characterised in that the main support (1) of the door frame consists of a material of higher strength than the auxiliary support (2).

4. Vehicle door according to one of Claims 1 to 3, characterised in that the profile cross-section of the main support (1), which is open on one side and/or the auxiliary support (2) are complemented to form a closed hollow profile in regions by sheet metal material sections fitted on their open profile side.

5. Vehicle door according to one of Claims 1 to 4, characterised in that the dividing line between the main support (1) and the auxiliary supports (2) is arranged to extend substantially diagonally with respect to the door contour.

6. Vehicle door according to one of Claims 1 to 5, characterised in that the door window frame (11) is attached by welding to the main support (1) of the door frame.

7. Vehicle door according to one of Claims 1 to 6, characterised in that a side impact protection device (15) is provided, which at the same time also forms the supplement of the main support (1) as a load-receiving or load-carrying unit.

8. Vehicle door according to one of Claims 1 to 7, characterised in that the side impact protection device (15) consists of a prefabricated structural unit, which comprises two tubes (16, 17) arranged at a vertical distance apart and fixing brackets (18) connected to the latter, in particular by welding, the fixing brackets (18) comprising between two receiving sections for the tube ends bearing against their outer surface, a central part elevated to correspond to the depth of the profile cross-section of the main and auxiliary supports (1, 2) of the door frame.

9. Vehicle door according to one of Claims 1 to 8, characterised in that the main support (1) is supplemented over the length of the window aperture reinforcement to form a closed hollow profile and by way of substantially vertically directed regions is supplemented by the side impact protection device (15) to form a type of lattice work support.

10. Vehicle door according to one of Claims 1 to 9, characterised in that the main support and the auxiliary support or supports (1, 2) simultaneously also form the two end faces as well as the closed under side of the door body, so that both the outer door covering as well as the inner door panelling may be formed by sheet parts having a substantially smooth surface.

## Revendications

1. Porte de véhicule automobile dont la portière se compose d'un châssis porteur assemblé avec des éléments de recouvrement non porteurs, tels que les panneaux de porte intérieur et extérieur (3), où les pièces de garniture prévues sur la porte, telles que les charnières ou moitiés de charnière (7), (8) de porte, les parties de serrure (10) et les pièces encastrées comme le mécanisme de remonte-vitre, sont ou peuvent être montées sur le châssis porteur, *caractérisée en ce que* le châssis dont la forme correspond au contour de la portière, se compose de plusieurs profilés en tôle emboutie, assemblés entre eux, ouverts au moins d'un côté, l'un des profilés constituant le support principal (1) tandis que le ou les autres profilés complémentaires constituent des supports auxiliaires (2) de sorte que toutes les pièces constitutives du châssis se complètent pour former un module de châssis de porte rigide.

2. Porte de véhicule automobile selon la revendication 1 *caractérisée en ce que* le support principal (1) du châssis de porte est en matériau plus épais que les supports auxiliaires (2).

3. Porte de véhicule automobile selon la revendication 1 *caractérisée en ce que* le support principal (1) du châssis de porte est en matériau plus résistant que les supports auxiliaires (2).

4. Porte de véhicule automobile selon l'une des revendications 1 ou 3 *caractérisée en ce que* le profilé ouvert d'un côté constituant le support principal (1) et/ou les supports auxiliaires (2) est complété partiellement par des segments de tôle montés sur le côté ouvert du profilé en vue de former un profilé fermé creux.

5. Porte de véhicule automobile selon l'une des revendications 1 à 4 *caractérisée en ce que* la ligne de séparation entre le support principal (1) et les supports auxiliaires (2) s'étend pour l'essentiel en diagonale par rapport au contour de la porte.

6. Porte de véhicule automobile selon l'une des revendications 1 à 5 *caractérisée en ce que* l'encadrement (11) de la vitre de la porte est fixé par soudage sur le support principal (1) du châssis de porte.

7. Porte de véhicule automobile selon l'une des revendications 1 à 6 *caractérisée par* un dispositif (15) de protection contre les chocs latéraux, qui constitue simultanément un complément au support principal (1) de façon à former une unité porteuse, respectivement réceptrice de charge.

8. Porte de véhicule automobile selon l'une des revendications 1 à 7 *caractérisée en ce que* le dispositif de protection (15) contre les chocs latéraux est constitué d'un module de construction préfabriqué composé de deux tubes (16), (17) disposés à une certaine distance verticale l'un au-dessus de l'autre, et, de consoles de fixation (18) assemblées avec les tubes (16), (17), plus particulièrement par soudage, où lesdites consoles (18) comportent une partie médiane surélevée en fonction de la profondeur de la section transversale de profilé des supports principal (1) et auxiliaires (2), et, deux segments de réception prolongeant les faces extérieures de ladite partie surélevée, destinés à la fixation des extrémités des tubes (16), (17).

9. Porte de véhicule automobile selon l'une des revendications 1 à 8 *caractérisée en ce que* le support principal (1) est complété, sur la longueur de la pièce de renforcement (4) du logement de la vitre de façon à former un profilé fermé creux, et, dans des zones verticales, par le dispositif de protection (15) contre les chocs latéraux pour former une sorte de support en treillis.

10. Porte de véhicule automobile selon l'une des revendications 1 à 9 *caractérisée en ce que* le support principal (1) et le ou les supports auxiliaires (2) forment simultanément les deux côtés frontaux et le côté inférieur fermé de la portière de sorte que le panneau extérieur et le panneau intérieur de porte peuvent être constitués de plaques sensiblement planes.
